# EUROPEAN PATENT APPLICATION

(11) **EP 4 840 913 A1**
(43) Date of publication of application: **18.11.2026**
(21) Application number: 26176178.7
(22) Date of filing: 04.05.2026
(51) Int. Cl.: C09D 11/037, C09D 11/03, C09D 11/102, C09D 11/107

(54) **DECOR PRINTING INK, METHODS, DECOR UNIT, LIVING SPACE COMPONENT**

(30) Priority: 13.05.2025 EP 25175982
(71) Applicant: Interprint GmbH, 59759 Arnsberg (DE)
(72) Inventor: Kracht, Bernd, 9107 Urnäsch (CH)
(74) Representative: Fritz Patent- und Rechtsanwälte PartmbB

(57) **Abstract**

The invention relates to a decor printing ink (1) for the production of decor units (100), comprising a carrier unit (100a) and a decor printing ink layer (1), for living space components (1000) comprising at least the following components: water (2); and color pigments (3); and at least one binding agent (4) for binding the color pigments (3) on the carrier unit (100a). The binding agent is an acrylate (4). The acrylate (4) comprises an aqueous polymer dispersion (4). The invention further comprises a method for producing the decor printing ink (1), a method for producing a decor unit (100), a decor unit (100) and a living space component (1000).

## Description

The present invention relates to a decor printing ink comprising the components water and color pigments as well as a binding agent for binding the color pigments.

Decor printing inks are used for the printing of decor units, such as decor printing ink layers on paper webs or the like that are used for the production of living space components, such as flooring boards, furniture walls, furniture doors or the like. High print runs are demanded especially by furniture industry so that rotary printing techniques are used, especially in combination with gravure printing method, while digital printing is also on the rise here.

Today, these decor printing inks are aqueous solutions, which means that the solvent in the printing ink is formed by water. Color pigments, which can be organic compounds, are bound here on the decor paper or the like for living space components using protein binding agents, such as casein.

Such printing inks have some disadvantages. For example, pigments can change their coloration behavior if they are exposed to high levels of UV radiation. This leads to an undesirable change in the color impression. Resistance to radiation is referred to as light fastness and is measured in accordance with DIN EN ISO 105-B02 and DIN EN ISO 4892-2. It becomes particularly problematic when high UV radiation is combined with increased humidity. This accelerates the change, especially in red pigments such as PR254. This reduces the red content of a color and the printed image appears greener. This is a particular problem for furniture parts or floors in hot and humid climates. Light fastness can be measured in a weathering chamber in accordance with DIN EN ISO 4892-2 and DIN EN ISO 105-B02. The evaluation scale is the blue wool scale or the gray scale.

Another disadvantage of such decor printing inks is that the organic components are nutrients for bacteria. Such decor printing inks can therefore germinate quickly. The bacterial load of the printing ink can be determined using a dip-slide test. A test stick with a nutrient solution applied to it is exposed to the sample and then placed in an incubator for 24 hours. The bacteria multiply there. The quantity of bacterial colonies is assessed visually. A contaminated decor printing ink changes its properties, in particular its light fastness is reduced. To prevent this, biocides are added to the ink. However, this makes the decor printing ink a hazardous substance in accordance with Regulation (EC) No. 1272/2008 on classification, labeling and packaging (CLP). Users must be regularly trained in handling hazardous substances as a regulation by law in many countries.

Additionally, in gravure printing technique, the decor printing ink is transferred from recesses engraved in a printing form onto a substrate. The recesses are called cells. They can be created electromechanically using a diamond graver or by bombarding the printing form with a laser, causing the material to vaporize. Typical cells have a maximum diameter of a few hundred micrometers and a depth of less than 100 µm. The volume of the cells determines the amount of printing ink that can be transferred to a substrate. In a lighter area of an image, the volumes of the cells are smaller than in a darker area of the image. There are other factors that determine the amount of ink transferred. These include the printing speed, the pressure with which a substrate is pressed onto a printing form, the absorbency of the substrate and the rheology of the ink.

A user adjusts the viscosity of the ink to these parameters for printing. The viscosity is determined by the amount of solvent or a wetting agent. If low viscosities must be selected, this has a number of disadvantages. For example, the printing ink sinks deep into the paper core on highly absorbent substrates such as decorative paper. The pigments are distributed over a large volume and the pigment concentration decreases. This makes the color appear lighter than if it remained on the surface. On non-absorbent substrates such as plastics or similar, the printed dots smear. If, on the other hand, the viscosity of the printing ink is too high, the cells are no longer emptied sufficiently, so that the ink is transferred sufficiently. Again, the pigment concentration is reduced and the color appears lighter.

Inks made for other printing techniques, especially inject inks, cannot be used in combination with gravure printing technique for several reasons: The proportion of in inkjet ink is significantly higher than in ink used for gravure printing, e.g. the glycerin content as humectants in inkjet inks is significantly higher than in gravure inks. The print heads must not dry out too quickly. The particle size distribution in inkjet inks is shifted toward significantly smaller pigments. This is because the pigments must be ejected through the printhead nozzles. In gravure printing, however, pigments that are too small result in significantly poorer opacity. The viscosity of inkjet inks ranges from 3.5 to 4.5 mPa·s and is thus much lower than in gravure printing. In gravure printing, however, rapid drying is expressly desired. Furthermore, the dispersions in inkjet are not encapsulated, as they must pass through the nozzles. In gravure printing, on the other hand, encapsulation of the pigments prevents agglomeration. An expert would therefore never use a gravure ink in digital printing or an inkjet ink in gravure printing.

It is therefore the object of the present invention to provide an improved decor printing ink for the production of decor units for living space components. as well as an improved process for the production of the decor printing ink, an improved process for the production of a decor unit, an improved decor unit and an improved living space component, in particular with better resistance to UV radiation and wherein at least the decor printing ink is preferably not to be classified as a hazardous substance, in particular for gravure printing technique.

The problem is solved by a decor printing ink with the features according to claim 1, a method for production the decor printing ink according to claim 8, a method for producing a decor unit according to claim 9, a decor unit produced according to the method according to claim 11, a decor unit according to claim 12 and a living space component with the features according to claim 13. Preferred further embodiments are the subject of the dependent claims. Further features and properties can be seen from the general description and from the description of the embodiments.

The decor printing ink according to the invention for the production of decor units, comprising a carrier unit and a decor printing ink layer, for living space components comprises at least the following components:
- water; and
- color pigments; and
- one binding agent for the color pigments on the carrier unit.
The binding agent is an acrylate. Preferably, the acrylate comprises an aqueous polymer dispersion.

The decor printing ink according to the invention has many advantages. A significant advantage of the decor printing ink is that no protein binding agents, such as casein, are used as a binding agent. Surprisingly, tests have shown that by use of an acrylate as a binding agent acceptable and good printing properties, especially in combination with gravure printing method and in particular in combination with a rotary printing technique, can be achieved, despite the well-known inherent properties of acrylates such as high viscosity and fast drying time of inks and paints containing acrylates that can in particular result in clogging. Reservations of a person skilled in the art are surprisingly overcome. Another advantage is that no biocide is required, the decor printing ink is not a hazardous substance according to the regulation (EC) No. 1272/2008 on classification, labeling and packaging (CLP) and users do not require any special training. In addition, the decor printing ink can be processed over a significantly longer period of time than the ink known from the prior art. Furthermore, the acrylate is particularly UV-resistant, so that there is at least a significant improvement in lightfastness. The improved decor printing ink is also inexpensive to process, in particular compared to decor printing inks with protein binding agents.

A composition of the decor printing ink in fluid form is claimed here. In particular, a fluid form comprises a liquid or paste form. Unless explicitly described, all ratios and/or concentrations refer to volume ratios and/or volume concentrations, in particular percent per volume of a component in the total decor printing ink, preferably in liquid form.

Preferably the decor printing ink is an aqueous solution, which in particular means here that water is the component with largest concentration than the binding agent, in particular of all components. Preferably water is present in a concentration of at least 50 percent per volume, particularly 60 percent per volume, particularly preferred 70 percent per volume or even 80 percent per volume. Even higher concentrations of water of at least 85 percent per volume, 90 percent per volume or 95 percent per volume can be preferably possible.

Preferably, the acrylate comprises an aqueous polymer dispersion. In particular, the polymer dispersion is taken from a group of polymer dispersions comprising a copolymer of acrylic acid and methacrylic acid esters, in particular also known as PAC 307 from Indulor, a dispersion of styrene and acrylic acid esters, in particular also known as PAC 319 from Indulor, an alkali-soluble pure acrylate dispersion, in particular also known as PAC 308 from Indulor, a solution polymer of methacrylic acid esters, in particular also known as PAC 317H from Indulor, a dispersion of methyl methacrylate, in particular also known as PAC 281 from Indulor. In particular the polymer dispersions are polymer dispersions from the company Allnex, preferably with special products from the Setaqua series, the company Indulor, preferably with special products from the PAC series or the company Alberdingk Boley, preferably with special products from the AC series. Mixtures of aqueous polymer dispersions are also possible.

The acrylate is particularly preferably present in a concentration of between 2 percent by volume and 50 percent by volume, especially between 7 percent by volume and 20 percent by volume and particularly preferably in a concentration of between 10 percent by volume and 15 percent by volume. The color pigments can be bound particularly well onto the carrier unit at these concentrations. At the same time, tests have shown that at such low concentrations, the negative properties of the acrylate for printing processes, in particular for gravure printing methods using the rotary printing technique, do not have essential impact. In particular, viscosities and drying times can be set, which can also be used for gravure printing method in conjunction with the rotary printing technique.

In particular, the color pigments are formed as color pigments taken from a group of color pigments comprising PY 55, PY 109, PY 110, PY 120, PY 150; PY 181, PY 83, PR 122, PR 146, PR 166, PR 170, PR 176, PR 242, PR 254, PR 207, PB 15:3, PB 28, PV 19, PV 23, PW 6. Advantageously, the designations are according to the list of pigments and/or DIN 55944. Alternatively or additionally, the color pigments may comprise iron oxide pigments, such as from Bayferrox, and/or various mother-of-pearl pigments, such as from Iriodin. Advantageously, these color pigments can be bound particularly well by the acrylate as shown by tests. Furthermore, also other types of color pigments may be used such as carbon black.

In particular, the color pigments are present in a, preferably aqueous, color pigment paste, in particular for the production of the decor printing ink. In particular, a concentration of the color pigments in the aqueous paste is possible between 5 percent by volume and 95 percent by volume, preferably between 20 percent by volume and 75 percent by volume, particularly preferably between 30 percent by volume and 60 percent by volume. Advantageously, the aqueous pastes enable the decor printing ink to be produced without pigment lumps. In particular the color pigment paste comprises an acrylate. Furthermore, advantageously no other binding agent, in particular no casein, is necessary.

Preferably, a wetting agent is included as a component. In particular, the wetting agent does not comprise volatile organic compounds (VOC). In particular, the wetting agent is a mixture of various components of non-volatile organic compounds. Advantageously, the wetting agent makes it possible to adapt and especially reduce interfacial tension. Advantageously, the wetting agent is present in a surface-active preparation. Advantageously, the wetting agent enables improved wetting of the solids as a carrier unit.

A wetting agent is advantageously present in the decor printing ink in a concentration of the wetting agent between 0.1 percent by volume and 5 percent by volume, preferably between 0.5 percent by volume and 4 percent by volume, particularly preferably between 1 percent by volume and 3 percent by volume, preferably 2 percent by volume. Advantageously, such low concentrations already enable beneficial wetting of a surface of a solid, in particular of a carrier unit. In result an advanced transfer of the decor printing ink, especially form a cell in gravure printing method, onto the carrier unit is achieved, despite to the use of an acrylate as binding agent. Furthermore, tests have shown that the use of a wetting agent allows the adaption of interfacial tensions for an efficient emptying of cells in gravure printing technique despite of high viscosity. The viscosity is measured by the flow time from a DIN cup with an opening of 4 mm or 3 mm. Other cups, such as Frikmar cups, are also common. Flow times for casein paints in DIN 4 mm cups are between 12 seconds and 35 seconds. An acrylic ink can still be printed with a satisfactory print quality if the flow time exceeds 40 seconds.

In particular, a defoamer is included as a component. In particular, the defoamer is a silicone-based defoamer. Alternatively, or additionally, defoamers based on mineral oils can be used, which show an improvement in the defoaming effect. Advantageously, a defoamer has a corresponding interfacial activity that is suitable for suppressing foam formation. Advantageously, the defoamer is present in a concentration of the defoamer between 0.01 percent by volume and 2 percent by volume, preferably between 0.5 percent by volume and 1.5 percent by volume, and especially about 1 percent by volume. Advantageously, at these concentrations there are no significant interactions with the other components while simultaneously having a positive effect.

In particular, a biocide is included as a component. Preferably, the biocide is methylisothiazolinone and/or benzisothiazolinone from the class of isothiazolinones. Advantageously, the biocide is present in the decor ink in a concentration below of 1 percent by volume, preferably below 0.7 percent or 0.3 percent by volume and particularly preferably below of 0.1 percent by volume. A dip-slide test shows that the decor printing ink has no bacterial contamination. At such low concentrations a CLP-classification is not necessary. At such low concentrations the decor printing ink is not classified as a hazardous substance according to the regulation (EC) No. 1272/2008 on classification, labeling and packaging (CLP). Advantageously, the biocide enables even better long-term preservation of the decor printing ink even in the event of contamination with microorganisms, such as bacteria, or nutrients for microorganisms.

Preferably, at least one additional additive is included as a component. Advantageously, the additional additive is formed by a polyurethane dispersion and/or a derivative of the polyurethane dispersion. Advantageously, the polyurethane dispersion and/or a derivative of a polyurethane dispersion enables improved light fastness. Further an improved film formation is recognized. Advantageously, the additional additive is present the decor printing ink in a concentration of between 0.1 percent by volume and 5 percent by volume, preferably between 1 percent by volume and 4 percent by volume and particularly preferably of 2 percent by volume. Preferably, even a low concentration enables considerably improved light fastness without significantly affecting other properties of the decor printing ink. A weathering test according to DIN EN ISO 4892-2 shows that a light fastness of at least 6 on the blue wool scale.

In one embodiment, Ammonia or Diethanolamine is included for adjustment of a pH-Value. The pH-Value is adjusted by the addition of Ammonia or Diethanolamine preferred between 5 and 11, particularly preferred between 7 and 9. The pH-Value is important for a good printing quality and transfer of the decor printing ink onto the carrier unit.

Further features and advantages of the decor printing ink according to the invention are apparent from the overall general description and from the description of the embodiments.

Another inventive aspect of the invention is the usage a decor printing ink described above for the production of a decor unit, in particular using a gravure printing method, especially in combination with a rotary printing technique. A person skilled in the art has a reservation to use a decor printing ink with acrylate especially for gravure printing, in particular in combination with a rotary printing technique, due to the poor processability of the acrylate. As the acrylate forms here only a component in the aqueous solution at a low volumetric concentration the negative properties do not come into play. Surprisingly the decor printing ink can be processed with the same quality results as a decor printing ink comprising casein as a binding agent with the same methods and processes. Additionally, a use of the decor printing ink for the production of a decor unit and/or a living space component are aspects of the invention. Further features and advantages of the usage of the decor printing ink according to the invention are apparent from the overall general description and from the description of the embodiments.

The method according to the invention for producing the decor printing ink described above comprises at least mixing and/or blending the following components in any order:
- water; and
- color pigments, in particular in the form of a color pigment paste; and
- a binding agents; and wherein a binding agent is preferably an acrylate (4); and wherein the acrylate (4) comprises in particular an aqueous polymer dispersion (4).
- in particular defoamers, biocides, wetting agents, additives or the like.

The method according to the invention also has many advantages. A significant advantage of the method is that the components can be mixed and/or blended in any order. Due to the compatibility of the components, many components can be added which may not be used in protein binders, such as casein, or which require special processes. In particular, very acidic products that would otherwise lead to precipitation can be added as compounds without any problems. Preferably, water is used as the basic component for production, into which the remaining compounds are then added and then mixed and/or blended.

Further features and advantages of the method for producing the decor printing ink according to the invention are apparent from the overall general description and from the description of the embodiments.

The method according to the invention for producing a decor unit comprises at least the following method steps:
- provision of a carrier unit, the carrier unit being formed in particular as a sheet or web of paper; and
- coating of the carrier unit with a decor printing ink described above.

The carrier unit can also be formed as a sheet or a web of polyvinylchlorid, polyethylene, polypropylene or polyethylene terephthalate. Tests have shown that a sufficient adhesion of the decor printing ink can also be achieved on the plastic materials.

Advantageously, the coating is applied using a gravure printing method. Advantageously, the carrier unit can be coated using all method. Advantageously, a decor printing ink described above is used to produce the decor unit.

In a preferred embodiment the decor printing ink is applied using a rotary printing technique. Tests show that surprisingly a decor printing ink including acrylate described above can be applied to a carrier unit via the rotary printing technique. A person skilled has a reservation to use a decor printing ink containing acrylate in combination with a rotary printing technique. Inks containing acrylate are well known for their fast drying time, poor flow properties, and their film formation during drying. Such properties result in a bad poor processability, especially in combination with a rotary printing technique. Such disadvantages are overcome by the present decor printing ink, where acrylate forms a compound in an aqueous based solution. Furthermore, other printing techniques like sheet printing can also be used for the application of the decor printing ink.

In one embodiment, the carrier unit of paper is impregnated before or after coating. Advantageously the impregnated carrier unit of paper has an improved water resistance.

Further features and advantages of the method according to the invention for producing a decor unit are apparent from the overall general description and from the description of the embodiments.

The decor unit according to the invention is produced according to a method described above. Further features and advantages of the decor unit according to the invention produced according to the method described above are apparent from the overall general description and from the description of the embodiments.

The decor unit according to the invention comprises a carrier unit and at least one ink layer of a decor printing ink described above. A decor unit can comprise several ink layers that are printing at least partly over one another.

The decor unit according to the invention also has many advantages. A significant advantage of the decor unit according to the invention is that no casein is used for production. Further features and advantages of the decor unit according to the invention can be seen from the overall general description and from the description of the embodiments.

The living space component according to the invention comprises at least one decor unit described above, at least one carrier unit, and wherein the decor unit is firmly connected to the carrier unit. In particular, at least one layer of lacquer is included, which is applied to the decor unit. Advantageously, the lacquer layer can be used to adjust the gloss of the surface.

In an advantageous embodiment, the living space component is designed as a furniture part, such as a furniture wall and/or a furniture door, or as a flooring element, such as a flooring board.

The living space component according to the invention also has many advantages. A significant advantage of the living space component is that no casein is used for its production. Further features and advantages of the living space component according to the invention are apparent from the entire general description and from the description of the embodiments.

Further features and advantages of embodiments of the invention are described below with reference to the drawings. The same reference signs are used for identical or similar parts and for parts with identical or similar functions. It shows:
- Fig. 1a,b: a perspective view of embodiments of living space components according to the invention;
- Fig. 2: a sectional view through an embodiment of a living space component according to the invention with a decor unit according to the invention with a decor printing ink layer with a decor printing ink according to the invention; and
- Fig. 3: a schematic view of an embodiment of a decor printing ink according to the invention in fluid form.

It is not necessary for a living space component 1000 according to the invention, a decor unit 100 according to the invention, a method according to the invention and/or a decor printing ink 1 according to the invention to have all the features described below. It is also possible for a living space component 1000 according to the invention, a decor unit 100 according to the invention, a method according to the invention and/or a decor printing ink 1 according to the invention to have only individual features of the embodiment example described below.

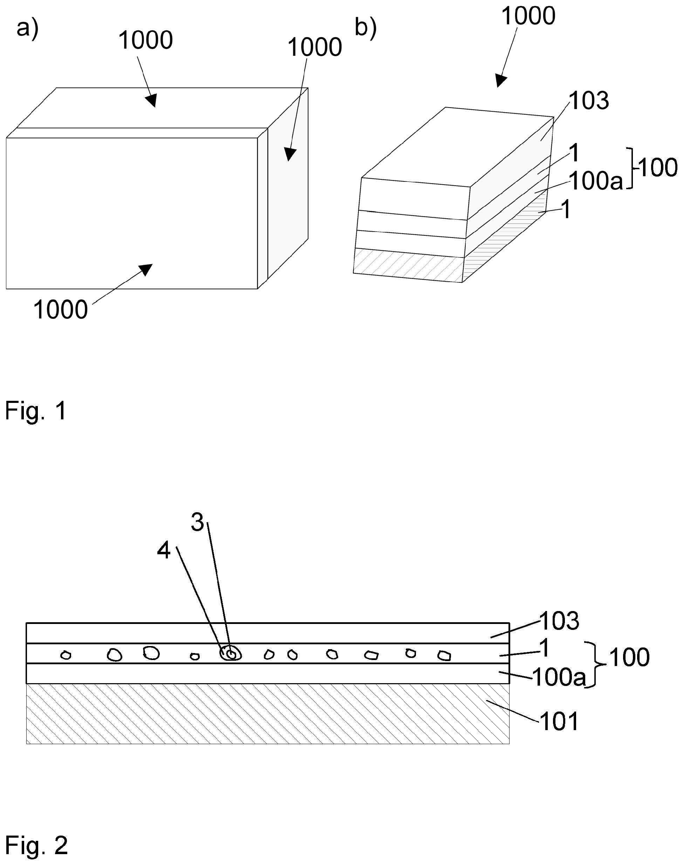

Fig. 1a,b show a perspective view of embodiments of living space components 1000 according to the invention. Fig. 1a shows living space components 1000, which are designed as furniture walls 1000 and a furniture door 1000 of a cupboard or the like. Fig. 1b shows a furniture component 1000, which is designed here as a flooring elements 1000 and further as a flooring board 1000.

Fig. 2 shows a sectional view through an embodiment of a living space component 1000 according to the invention with a decor unit 100 according to the invention with a decor printing ink layer 1 of a decor printing ink 1 according to the invention.

The living area component 1000 here comprises a carrier unit 101, onto which a decor unit 100 is laminated. The decor unit 100 comprises a carrier unit 100a, which is designed here as a paper web 100a. Furthermore, the paper web 100a is coated with a decor printing ink layer 1. The decor printing ink layer 1 comprises color pigments 3, which are dissolved in water 2. An acrylate 4 as a binding agent 4 is present to allow fixation of the color pigments 3 to a carrier unit 100a.

There is also a lacquer layer 103 consisting of a UV-curing lacquer 103 that is transparent.

To produce the decor unit 100, the carrier unit 100a is coated with the decor printing ink 1 using a gravure printing method. The decor printing ink 1 is further applied using a rotary printing technique.

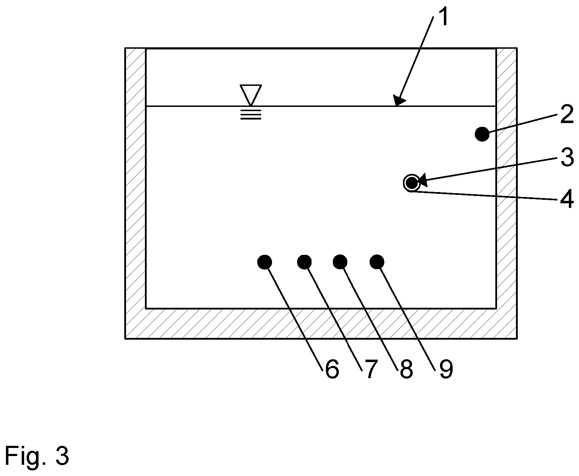

Fig. 3 shows a schematic view of an embodiment of a decor printing ink 1 according to the invention in fluid form. The decor printing ink 1 comprises water 2 and color pigments 3. The color pigments 3 are surrounded or at least touched by binding agent 4 being an acrylate 4. Advantageously, no casein is used here as binding agent 4. This means that no biocides need to be added to the decor printing ink 1. In addition, the decor printing ink 1 has a significantly improved light fastness.

The acrylate 4 here is a polymer dispersion 4. The acrylate 4 is present here in a concentration of 20 percent by volume in the fluid decor printing ink 1. The color pigments 3 are shown schematically in Fig. 3. The color pigments 3 are formed here as yellow color pigments 3, in detail Pigment Yellow 150, abbreviated PY 150 of the list of pigments. To improve the properties, in particular the coating properties, a wetting agent 6 and a defoamer 7 are present here as further components. In this embodiment, a biocide 8 is also added to enable long-term preservation even in the event of contamination with nutrients for microorganisms. Furthermore, an additional additive 9 is present here, which is designed here as a polyurethane dispersion or derivative of a polyurethane dispersion, in order to improve light fastness, in particular UV-resistance, and in particular film formation for coating.

Advantageously, the individual components of the decor printing ink 1 can be combined and mixed in any order during production to the basis water 2. In practice, water 2 is used here as the base component, into which the other components are introduced and mixed and/or blended.

### Reference sign:

- 1: decor printing ink, decor printing ink layer
- 2: water
- 3: color pigment, color pigments
- 4: binding agent, acrylate, aqueous polymer dispersion
- 6: wetting agent
- 7: defoamer
- 8: biocide
- 9: additional additive
- 100: decor unit
- 100a: paper web, carrier unit
- 101: carrier unit
- 103: lacquer layer, lacquer
- 1000: living space component, flooring board, furniture wall, furniture door

## Claims

1. Decor printing ink (1) for the production of decor units (100), comprising a carrier unit (100a) and at least a decor printing ink layer (1), for living space components (1000) comprising at least the following components:
- water (2); and
- color pigments (3); and
- a binding agent (4) for binding the color pigments (3) on the carrier unit (100a);
**characterized in**
**that** the binding agent (4) is an acrylate (4); and wherein the acrylate (4) comprises an aqueous polymer dispersion (4).

2. Decor printing ink (1) according to one of the preceding claims, wherein the acrylate (4) is present in a concentration of between 2 percent by volume and 50 percent by volume.

3. Decor printing ink (1) according to one of the preceding claims, wherein the color pigments (3) are formed as color pigments (3) which are taken from a group of color pigments (3) comprising PY 55, PY 109, PY 110, PY 120, PY 150, PY 181, PY 83, PR 122, PR 146, PR 166, PR 170, PR 176, PR 242, PR 254, PR207, PB 15:3, PB 28, PV 19, PV 23, PW 6, carbon black.

4. Decor printing ink (1) according to any one of the preceding claims, comprising a wetting agent (6) as a component in a concentration between 0.1 and 5 percent by volume.

5. Decor printing ink (1) according to any one of the preceding claims, comprising a defoamer (7) as a component in a concentration between 0.01 percent by volume and 2 percent by volume.

6. Decor printing ink (1) according to one of the preceding claims, comprising a biocide (8) as component, in particular methylisothiazolinone and/or benzisothiazolinone, in a concentration below of 1 percent per volume.

7. Decor printing ink (1) according to one of the preceding claims, comprising at least one additional additive (9) as a component, wherein the additional additive (9) is formed by a polyurethane dispersion and/or a derivative of the polyurethane dispersion.

8. Method for production of a decor printing ink (1) according to one of the preceding claims at least by mixing and/or blending the following components in any order:
- water (2); and
- color pigments (3), in particular in the form of an, preferably aqueous, color pigment paste;
- a binding agent (4); and wherein the binding agent (4) is an acrylate (4); and wherein an acrylate (4) comprises an aqueous polymer dispersion (4).
- in particular defoamers (7), biocides (8), wetting agents (6), additional additives (9) or the like.

9. A method of production a of printing decor unit (100) comprising at least the following method steps:
- providing a carrier unit (100a) formed as a web of paper (100a); and
- coating the paper web (100a) with a decor printing ink layer (1) of the decor printing ink (1) according to one of the preceding claims 1 to 8.

10. Method according to the preceding claim, wherein the coating is applied by means of a gravure printing method and using a rotary printing technique.

11. Decor unit (100) produced according to a method according to one of the two preceding claims.

12. Decor unit (100) comprising a carrier unit (100a) and an ink layer (1) of a decor printing ink (1) according to any one of claims 1 to 8.

13. Living space component (1000) comprising at least one decor unit (100) according to any of the two preceding claims and at least one carrier unit (101), and wherein the decor unit (100) is fixedly connected to the carrier unit (101).
